# EUROPÄISCHE PATENTSCHRIFT

(11) **EP 1 245 366 B1**
(45) Veröffentlichungstag und Bekanntmachung des Hinweises auf die Patenterteilung: **03.03.2004**
(21) Anmeldenummer: 02012772.6
(22) Anmeldetag: 03.04.1999
(51) Int. Cl.: B29C 47/68

(54) **Sperrmittel zur Steuerung des Durchflusses eines fliessfähigen Mediums**
Locking means for controlling the flow of a flowable medium
Mécanisme de blocage pour le contrôle du flux d'un milieu coulant

(30) Priorität: 30.04.1998 DE 19819195; 30.07.1998 DE 19834302
(43) Veröffentlichungstag der Anmeldung: 02.10.2002
(62) Teilanmeldung aus: 99948547.7
(73) Patentinhaber: Kreyenborg Verwaltungen und Beteiligungen GmbH & Co. KG, 48157 Münster (DE)
(72) Erfinder: Kreyenborg, Jan-Udo, 48145 Münster (DE); Stude, Rolf-Rüdiger, 48157 Münster (DE)
(74) Vertreter: Habbel, Hans-Georg, Dipl.-Ing.

(56) Entgegenhaltungen:
- EP-A- 0 875 357
- DE-C- 4 218 756
- DE-U- 29 517 140

## Beschreibung

Die Erfindung bezieht sich auf ein Sperrmittel zur Steuerung des Durchflusses eines fließfähigen Mediums gemäß dem Oberbegriff des Hauptanspruches.

Eine gattungsbildende Einrichtung wird in der DE 42 18 756 C1 beschrieben und schafft dieMöglichkeit, mit den bisher in großem Umfang eingesetzten Filtereinrichtungen bei Strangpressen und Spritzgießmaschinen ein Rückspülen durchzuführen, ohne dass die Anschaffung neuer Filtereinrichtungen notwendig ist. Bei dieser bekannten Einrichtung wird ein Zusatzgerät geschaffen, das an bestehende Einrichtungen anschließbar ist, um somit bei bestehenden Einrichtungen die Standzeiten, beispielsweise der Siebe, zu erhöhen.

In der nicht vorveröffentlichten EP 08 75 357 A1 wird eine Filtereinrichtung für Strangpressen und Spritzgießmaschinen beschrieben, bei der ein Bolzen als Sperrmittel eingesetzt wird, der quer zur Strömungsrichtung des Kunststoffstromes bewegbar ist, wobei dieser Bolzen in einem beheizbaren Zusatzgehäuse untergebracht ist.

Der vorliegenden Erfindung liegt die Aufgabe zugrunde, eine möglichst einfach aufgebaute Zusatzeinrichtung vorzuschlagen, die an bestehende Einrichtungen anschließbar ist und die z. B. ein problemloses Rückspülen ermöglicht und gleichzeitig als sogenanntes Anfahrventil genutzt werden kann.

Diese der Erfindung zugrundeliegende Aufgabe wird durch die Lehre des Anspruches 1 gelöst.

Vorteilhafte Ausgestaltungen sind in den abhängigen Ansprüchen erläutert.

Mit anderen Worten ausgedrückt wird vorgeschlagen, dass das Sperrmittel als Bolzen ausgebildet und in einem Vorsatzgehäuse angeordnet ist. Der Bolzen weist eine Durchflussöffnung für das fließfähige Medium auf, wobei die Durchflussöffnung dadurch gebildet wird, dass der Bolzen eine vorzugsweise umlaufende Einschnürung aufweist, die von dem Fließmedium durchströmt bzw. umströmt werden kann. Diese Einschnürung mündet an der Mündung der beiden Eintrittsteilkanäle. Der Bolzen ist quer zum fließfähigen Medium verschiebbar und weist zusätzlich einen Abführhauptkanal und einen Abführteilkanal auf, die an den Abführhauptkanal anschließen. Durch Verschieben des Bolzens kann nunmehr eine Stellung erreicht werden, in der der Eintrittshauptkanal über die im Bolzen vorgesehene Einschnürung mit einem Eintrittsteilkanal verbunden ist. Über die heute üblichen Steuerungen kann dieser das Sperrmittel bildende Bolzen in eine solche Stellung verfahren werden, dass einerseits der zu der einen Sieböffnung führende Eintrittsteilkanal ganz .. abgeschlossen ist und andererseits die Möglichkeit besteht, trotz Beschicken des anderen Eintrittsteilkanales eine Verbindung zum anderen Eintrittsteilkanal zu schaffen, so dass hier ein Vorfluten der Sieböffnung ermöglicht wird. Der als Sperrmittel ausgebildete Bolzen weist an seiner dem Eintrittshauptkanal zugewandten Seite einen Bypasskanal auf, der in Abhängigkeit der Stellung des Bolzens eine Verbindung zwischen dem Eintrittshauptkanal und der Außenatmosphäre herzustellen in der Lage ist.

Außerdem ermöglicht der gemäß den Unteransprüchen ausgebildete Bolzen, dass dann, wenn der Bolzen eine Stellung einnimmt, in der der Eintrittshauptkanal über die im Bolzen vorgesehene Einschnürung mit einem Eintrittsteilkanal verbunden ist, der andere Eintrittsteilkanal über einen Abführteilkanal mit dem Abführhauptkanal verbunden ist, so dass also das Beschicken des an die Filtereinrichtung anschließenden Werkzeuges weiterhin erfolgt, gleichzeitig aber das stillgesetzte Sieb von der Reinsiebseite zur Schmutzsiebseite hin durchströmt werden kann und die hier abgelösten Schmutzpartikel über den diesem Sieb zugeordneten Eintrittsteilkanal zurückgespült und sodann über einen Abführteilkanal in den Abführhauptkanal geführt werden. Der Abführhauptkanal mündet hiermit in die Atmosphäre.

Der als Sperrmittel ausgebildete Bolzen weist an seiner dem Eintrittshauptkanal zugewandten Seite einen Bypasskanal auf, der in Abhängigkeit der Stellung des Bolzens eine Verbindung zwischen dem Eintrittshauptkanal und der Außenatmosphäre herzustellen in der Lage ist.

Ein Ausführungsbeispiel der Erfindung wird nachfolgend am Beispiel einer Filtereinrichtung für Strangpressen und Spritzgießmaschinen anhand der Zeichnungen erläutert. Die Zeichnungen zeigen dabei in
- Fig. 1: eine Filtereinrichtung mit zwei Siebträgerbolzen und je einem in jedem Siebträgerbolzen angeordneten großen ovalen Sieb, in
- Fig. 2: die Sperrstellung des oberen Siebträgerbolzens und in
- Fig. 3: die Vorflutstellung für die Sieböffnung im oberen Siebbolzen, wobei in Fig. 2 und Fig. 3 die Ein-Trittsteilkanäle 8a und 8b im Schnitt um etwa 30° versetzt gezeichnet sind.

Das Sperrmittel kann zur Steuerung fließfähigen Mediums eingesetzt werden und unabhängig von dem zu steuernden Medium können die Vorteile des nachfolgend beschriebenen und in den Ansprüchen unter Schutz gestellten Sperrmittels eingesetzt werden.

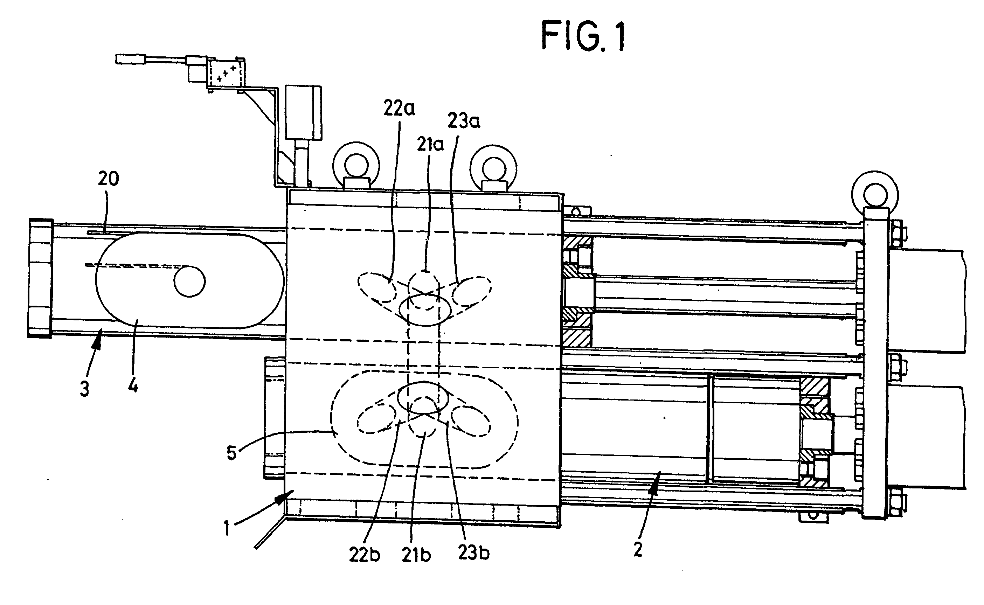

Gemäß Fig. 1 sind in einem Gehäuse 1 zwei Siebträgerbolzen 2 und 3 angeordnet, die bei dem dargestellten Ausführungsbeispiel übereinander angeordnet sind. In den Siebträgerbolzen 2 und 3 sind in Sieböffnungen 28 und 29 Filterelemente 4 und 5 vorgesehen, die - wie aus der Zeichnung deutlich ersichtlich - oval ausgebildet sind, wobei sich die lange Achse des Ovals in Richtung der Verschieberichtung der Siebträgerbolzen 2 und 3 erstreckt und die Länge der ovalen Achse der Filterelemente 4, 5 gegenüber der Länge der Gehäusebohrung im Gehäuse 1 derart gewählt ist, daß nur die zur Abdichtung der Siebträgerbolzen 2, 3 in der Gehäusebohrung erforderliche Länge der Siebträgerbolzen 2, 3 filterelementfrei ist. An sich bekannte Lüftungsnuten 20 sind in den Siebträgerbolzen 2, 3 ausgearbeitet.

Aus der Darstellung gemäß Fig. 1 ist ersichtlich, daß kurz nach Beginn der Ausschiebebewegung des einen oder anderen Siebträgerbolzens 2 oder 3 die periphere Randseite der jeweiligen Filterelemente 4 oder 5 bereits mit der Außenatmosphäre in Verbindung kommt, während der übrige Teil der Filterelemente 4 oder 5 noch mit der Zuführung des zu filtrierenden oder gefilterten Kunststoffmaterials in Verbindung steht, so daß hier eine unmittelbare Verbindung zwischen der Zufuhr des Kunststoffmaterials oder der Abfuhr des Kunststoffmaterials mit der Außenatmosphäre erfolgen würde.

Die Verschiebung des Siebträgerbolzens 2, 3 erfolgt in an sich bekannter Weise über hydraulische oder elektrische Einrichtungen und wird über entsprechende Steuerungen - wie allgemein im Stand der Technik üblich - gesteuert.

Um diese schädliche Verbindung zwischen der Sieböffnung und der Außenatmosphäre zu verhindern, wird gemäß der Erfindung ein Sperrmittel 10 vorgesehen, das bei dem dargestellten Ausführungsbeispiel in Verbindung mit dem Gehäuse 1 wie folgt ausgebildet ist:

Das Gehäuse 1 weist einen Eintrittshauptkanal 6 und einen Austrittshauptkanal 7 auf, wobei vor dem Eintrittshauptkanal 6 eine in der Zeichnung nicht dargestellte Schnecke vorgesehen sein kann, durch welche das plastifizierte Kunststoffmaterial dem Eintrittshauptkanal 6 unter entsprechend hohem Druck zugeführt wird. Innerhalb des Gehäuses 1 teilt sich der Eintrittshauptkanal 6 in zwei Eintrittsteilkanäle 8a und 8b, die mit Sieböffnungen 28 bzw. 29 in Verbindung stehen, in denen die Filterelemente 4, 5 angeordnet sind. An die Reinsiebseite der Sieböffnungen 28, 29 schließen Austrittsteilkanäle 9a und 9b an, die zu einem Austrittshauptkanal 7 führen.

Vor dem eigentlichen Gehäuse 1 der Filtereinrichtung ist ein Zusatzgehäuse 24 vorgesehen, das einen als Sperrmittel ausgebildeten Bolzen 11 aufnimmt, der über hydraulische, pneumatische oder sonstige Mittel quer zur Strömungsrichtung des Kunststoffstromes verschiebbar ist. In diesem Gehäuse 24 münden Verlängerungen der Eintrittsteilkanäle 8a und 8b auf der einen Seite und gegenüberliegend auf der anderen Seite des Bolzens 11 mündet der Haupteintrittskanal 6. Anstelle eines Zusatzgehäuses kann das Sperrmittel auch in dem Gehäuse 1 angeordnet sein.

Die Fließverbindung zwischen dem Eintrittshauptkanal 6 und den Eintrittsteilkanälen 8a und 8b wird durch eine Einschnürung im Bolzen 11 erreicht, wobei bei dem dargestellten Ausführungsbeispiel der Bolzen 11 zylindrisch ausgebildet ist, d. h. im Querschnitt rund und die Einschnürung 12 über den ganzen Außenumfang des Bolzens 11 vorgesehen wird. Das durch das Gehäuse 24 und dem Bolzen 11 sowie den Eintrittshauptkanal 6 gebildete Gerät wird nachfolgend als Sperrmittel 10 bezeichnet, wobei der Bolzen 11 auch polygonal ausgebildet sein kann. Der Bolzen 11 weist weiterhin einen Abführhauptkanal 16 auf, der sich bei dem dargestellten Ausführungsbeispiel zentrisch in Längsachse des Bolzens 11 gesehen erstreckt und einenendes zur Atmosphäre hin frei mündet. Zwei Abführteilkanäle 14 und 15 erstrecken sich quer zur Längsachse des Abführhauptkanales 16 und münden einenendes in den Abführhauptkanal 16 und anderenendes an der Außenseite des Bolzens 11. Natürlich können auch andere Ausgestaltungen des oder der Abführhauptkanäle vorgesehen sein.

Zusätzlich ist der Bolzen 11 mit einem Bypasskanal 27 ausgerüstet, der so angeordnet ist, daß er in Fließverbindung mit dem Eintrittshauptkanal 6 bringbar ist, so daß das aus dem Eintrittshauptkanal 6 kommende Material nicht zu den Eintrittsteilkanälen 8a oder 8b geführt wird, sondern zur Atmosphäre hin abgeführt werden kann. Beim Start des Extruders wird verunreinigte und vercrakte Schmelze ungefiltert durch den Bypasskanal 27 nach außen abgelassen und erst nach diesem Prozeß wird die Produktion gestartet

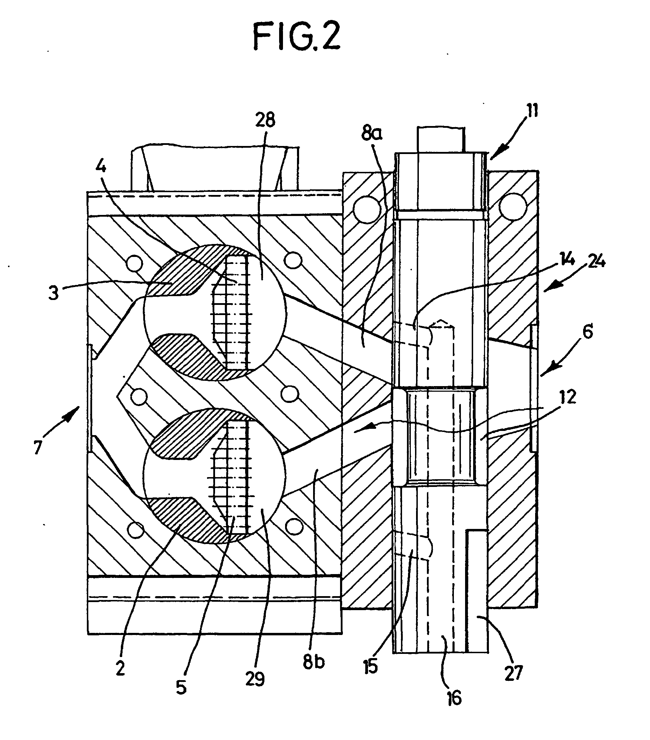

Bei der Darstellung gemäß Fig. 2 befindet sich der Bolzen in einer solchen Stellung, daß die Einschnürung 12 den Strom des durch den Eintrittshauptkanal 6 zugeführten Kunststoffmateriales zum Eintrittsteilkanal 8b führt. Von hier aus gelangt das Material zum Filterelement 5.

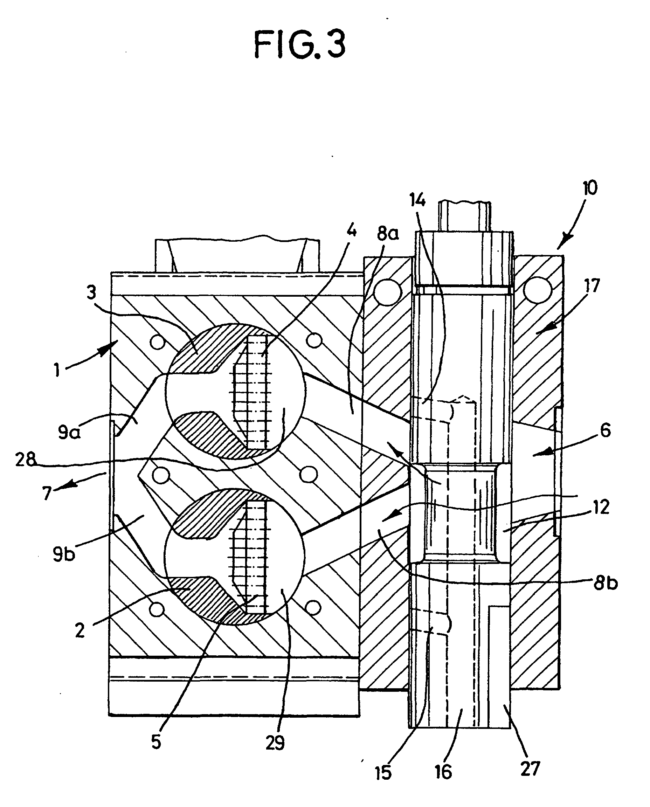

Fig. 3 zeigt, daß durch eine geringfügige Verschiebung des Bolzens 11 die Einschnürung 12 auch mit dem Eintrittsteilkanal 8a in Verbindung kommen kann, so daß ein Vorfluten der Sieböffnung 28 durchgeführt werden kann.

Fig. 1 zeigt weiterhin, daß jeder Eintrittsteilkanal sich zu der ihm zugeordneten Sieböffnung in zwei Anströmkanälen 22a, 23a bzw. 22b und 23b öffnet, so daß sehr günstige Anströmverhältnisse für die großen ovalen Filterelemente 4 bzw. 5 erreicht werden. Die Fig. 1 soll auch verdeutlichen, daß je Sieböffnung 28, 29 nur ein Abströmkanal 21 a bzw. 21 b vorgesehen ist.

Durch den Einsatz des vorbeschriebenen Sperrmittels 10 wird erreicht, daß dieses Sperrmittel auch bei anders ausgebildeten Extruderanordnungen in einfachster Weise als Anfahrventil und zum Rückspülen eingesetzt werden kann, so daß mit einem solchen Sperrmittel die unterschiedlichsten Aufgaben bei Filtereinrichtungen erreichbar sind.

## Patentansprüche

1. Sperrmittel zur Steuerung des Durchflusses eines fließfähigen Mediums mit in mindestens zwei getrennten Kanälen eines Gehäuses (1) zwischen mindestens einem Eintrittshauptkanal (6) und mindestens einem Austrittshauptkanal (7) angeordneten Filterelementen (4, 5), wobei das Sperrmittel (10) im Bereich des Eintrittshauptkanales (6) vor den Filterelementen (4, 5) angeordnet ist und in der Durchflußstellung das fließfähige Medium vom Eintrittshauptkanal (6) zu den Filterelementen (4, 5) nicht behindert, aber in einer Sperrstellung den Durchfluß des Mediums in einem Eintrittsteilkanal (8a oder 8b) vom Eintrittshauptkanal (6) trennt, **dadurch gekennzeichnet, daß** das Sperrmittel (10) durch einen den Eintrittshauptkanal (6) durchquerenden, quer zur Strömungsrichtung des fließfähigen Mediums verstellbaren, in einem Gehäuse (24) angeordneten Bolzen (11), und der Strömungsweg vom Eintrittshauptkanal (6) zu einem Austrittskanal durch eine Einschnürung (12) im Außenumfang des Bolzens gebildet ist, wobei der Bolzen (11) an seiner dem Eintrittshauptkanal (6) zugewandten Seite einen Bypasskanal (27) aufweist, der in Abhängigkeit der Stellung des Bolzens (11) eine Verbindung zwischen dem Eintrittshauptkanal (6) und der Außenatmosphäre herzustellen in der Lage ist.

2. Sperrmittel nach Anspruch 1, **dadurch gekennzeichnet, daß** die Mündung des Bypasskanales (27) in den Eintrittshauptkanal (6) derart angeordnet ist, daß der Eintrittshauptkanal (6) sowohl mit der Einschnürung (12) als auch mit dem Bypass (27) in Fließverbindung bringbar ist, aber durch Verstellen des Bolzens (11) die Verbindung zwischen Eintrittshauptkanal (6) und der Einschnürung (12) abschließbar ist, während die Verbindung zwischen dem Eintrittshauptkanal (6) und dem Bypasskanal (27) geöffnet ist.

3. Sperrmittel nach Anspruch 1 oder 2, **dadurch gekennzeichnet, daß** der Bolzen (11) des Spemmittels (10) zusätzlich zu seiner Bewegung in Längsachse auch um die Längsachse drehbar ist.

4. Sperrmittel nach Anspruch 1, **dadurch gekennzeichnet, daß** die Einschnürung (12) strömungsgünstig ausgebildet ist.

5. Sperrmittel nach einem der vorhergehenden Ansprüche, **gekennzeichnet durch** einen Abführhauptkanal (16) im Bolzen (11), der einenendes zur Atmosphäre mündet und an den zwei Abführteilkanäle (14, 15) anschließen, die bei Verschieben des Bolzens (11) mit einem der Eintrittsteilkanäle (8a, 8b) in Fließverbindung bringbar sind.

6. Sperrmittel nach einem der Ansprüche 1 bis 5, **dadurch gekennzeichnet, daß** bei Fließverbindung des Abführteilkanales (14, 15) mit den zugeordneten Eintrittsteilkanälen (8a, 8b) der Fließquerschnitt im Übergangsbereich zwischen den Eintrittsteilkanälen (8a, 8b) und den Abführteilkanälen (14, 15) kleiner ist als der Fließquerschnitt der Eintrittsteilkanäle (8a, 8b).

7. Sperrmittel nach einem der vorhergehenden Ansprüche 1 bis 3, **dadurch gekennzeichnet, daß** das Sperrmittel (10) in einem eigenen Gehäuse (17) angeordnet ist, das an ein Gehäuse (1) einer Arbeitseinrichtung anschließbar ist.

8. Sperrmittel nach einem der vorhergehenden Ansprüche, **dadurch gekennzeichnet, daß** das Sperrmittel (10) im Gehäuse (1) eines Siebwechslers angeordnet ist.

9. Sperrmittel nach Anspruch 1, **dadurch gekennzeichnet, daß** der Bolzen (11) im Schnitt rund ausgebildet ist und die Einschnürung (12) über den ganzen Umfang des Bolzens (11) vorgesehen ist.

## Claims

1. Locking means for controlling the flow of a flowable medium with filter elements (4, 5) arranged in at least two separate channels of a housing (1) between at least one main inlet channel (6) and at least one main outlet channel (7), the locking means (10) being arranged in the area of the main inlet channel (6) upstream the filter elements (4, 5) and, in the continuous flow position, not hindering the flowable medium flowing from the main inlet channel (6) to the filter elements (4, 5) but, in a locking position, separating the continuous flow of the medium in a partial inlet channel (8a or 8b) from the main inlet channel (6), **characterised in that** the locking means (10) is formed by a bolt (11) which traverses the main inlet channel (6), is adjustable in a transverse direction to the direction of flow of the flowable medium and arranged in a housing (24) and the flow path from the main inlet channel (6) to an outlet channel is formed by a constriction (12) in the outer circumference of the bolt, the bolt (11) having a by-pass channel (27) on its side facing the main inlet channel (6), which by-pass channel is capable of forming a connection between the main inlet channel (6) and the external atmosphere as a function of the position of the bolt (11).

2. Locking means according to claim 1 **characterised in that** the outlet of the by-pass channel (27)) into the main inlet channel (6) is arranged such that the main inlet channel (6) can be brought into flow connection both with the constriction (12) and with the by-pass (27) but the connection between the main inlet channel (6) and the constriction (12) can be closed by adjusting the bolt (11) while the connection between the main inlet channel (6) and the by-pass channel (27) is opened.

3. Locking means according to claim 1 or 2 **characterised in that** the bolt (11) of the locking means (10) in addition to its movement in the longitudinal axis is also rotatable around the longitudinal axis.

4. Locking means according to claim 1 **characterised in that** the constriction (12) is formed in a flow-enhancing manner.

5. Locking means according to any of the preceding claims **characterised by** a main discharge channel (16) in the bolt (11) which opens at one end towards the atmosphere and to which two partial discharge channels (14, 15) are connected which, on displacement of the bolt (11), can be brought into flow connection with one of the partial inlet channels (8a, 8b).

6. Locking means according to any of claims 1 to 5 **characterised in that**, in the case of the flow connection of the partial discharge channel (14, 15) with the corresponding partial inlet channels (8a, 8b), the cross-section of flow in the transition zone between the partial inlet channels (8a, 8b) and the partial discharge channels (14, 15) is smaller than the cross-section of flow of the partial inlet channels (8a, 8b).

7. Locking means according to one of the preceding claims 1 to 3 **characterised in that** the locking means (10) is arranged in its own housing (17) which can be connected to a housing (1) in one operational direction.

8. Locking means according to any of the preceding claims **characterised in that** the locking means (10) is arranged in the housing (1) of a screen changer.

9. Locking means according to claim 1 **characterised in that** the bolt (11) is formed with a round cross-section and the constriction (12) is provided over the entire circumference of the bolt (11).

## Revendications

1. Mécanisme de blocage pour le contrôle du flux d'un milieu coulant avec des éléments filtrants (4, 5) disposés dans au minimum deux canalisations séparées d'un carter (1) entre au minimum une canalisation principale d'entrée (6) et au minimum une canalisation principale de sortie (7), le mécanisme de blocage (10) étant placé à la hauteur de la canalisation principale d'entrée (6), devant les éléments filtrants (4, 5) et n'empêchant pas, en position du flux, le milieu coulant d'aller de la canalisation principale d'entrée (6) vers les éléments filtrants (4, 5), mais séparant, dans une position de blocage, le flux du milieu dans une canalisation partielle d'entrée (8a ou 8b) de la canalisation principale d'entrée (6), **caractérisé en ce que** le mécanisme de blocage (10) est formé par une tige (11) traversant la canalisation principale d'entrée (6), laquelle tige est réglable transversalement par rapport au sens du flux du milieu coulant, et est logée dans un carter (24), ainsi que par la course du flux de la canalisation principale d'entrée (6) vers une canalisation de sortie via un rétrécissement (12) sur la circonférence extérieure de la tige (11), celle-ci présentant une canalisation bypass (27) sur son côté tourné vers la canalisation principale d'entrée (6), celle-ci étant en mesure de constituer, en fonction de la position de la tige (11), une connexion entre la canalisation principale d'entrée (6) et l'atmosphère extérieure.

2. Mécanisme de blocage selon la revendication 1, **caractérisé en ce que** le dégorgement de la canalisation bypass (27) dans la canalisation principale d'entrée (6) est disposé de manière que la canalisation principale d'entrée (6) puisse être reliée au sens du flux, aussi bien avec le rétrécissement (12) qu'avec le bypass (27), le raccordement entre la canalisation principale d'entrée (6) et le rétrécissement (12) étant toutefois obturable en déplaçant la tige (11), alors que la connexion entre la canalisation principale d'entrée (6) et la canalisation bypass (27) est ouverte.

3. Mécanisme de blocage selon revendication 1 ou 2, **caractérisé en ce que** la tige (11) du mécanisme de blocage (10) peut également tourner sur l'axe longitudinal en plus de son mouvement dans l'axe longitudinal.

4. Mécanisme de blocage selon revendication 1, **caractérisé en ce que** le rétrécissement (12) affecte une configuration facilitant le flux.

5. Mécanisme de blocage selon l'une des revendications précédentes, **caractérisé par** une canalisation principale d'évacuation (16) dans la tige (11), qui arrive d'un côté dans l'atmosphère et auquel sont raccordées deux canalisations partielles d'évacuation (14, 15), lesquelles sont reliables, dans le sens du flux, avec l'une des canalisations partielles d'entrée (8a, 8b) après déplacement de la tige (11).

6. Mécanisme de blocage selon l'une des revendications 1 à 5, **caractérisé en ce que** la section du flux est inférieure entre les canalisations partielles d'entrée (8a, 8b) et les canalisations partielles d'évacuation (14, 15) de la section du flux des canalisations partielles d'entrée (8a, 8b) en reliant dans le sens du flux la canalisation partielle d'évacuation (14, 15) avec les canalisations partielles d'entrée (8a, 8b) afférentes.

7. Mécanisme de blocage selon l'une des revendications précédentes 1 à 3, **caractérisé en ce que** le mécanisme de blocage (10) est logé dans son propre carter (17), lequel est reliable à un carter (1) d'un dispositif de travail.

8. Mécanisme de blocage selon l'une des revendications précédentes **caractérisé en ce que** le mécanisme de blocage (10) est logé dans le carter (1) d'un inverseur de tamis.

9. Mécanisme de blocage selon la revendication 1, **caractérisé en ce que** la tige (11) est de section ronde et que le rétrécissement (12) existe sur toute la circonférence de la tige (11 ).
